# EUROPEAN PATENT SPECIFICATION

(11) **EP 2 091 891 B1**
(45) Date of publication and mention of the grant of the patent: **04.07.2012**
(21) Application number: 07851982.4
(22) Date of filing: 28.11.2007
(51) Int. Cl.: C01B 25/40, C05C 3/00, C05D 1/00, C05B 13/06, C05B 11/06

(54) **PRODUCTION OF NPK OR NP MATERIAL CONTAINING POLYPHOSPHATES**
HERSTELLUNG VON POLYPHOSPHATHALTIGEM NPK- ODER NP-MATERIAL
PRODUCTION DE MATÉRIAU À BASE DE NPK OU DE NP CONTENANT DES POLYPHOSPHATES

(30) Priority: 05.12.2006 NO 20065594
(43) Date of publication of application: 26.08.2009
(73) Proprietor: YARA International ASA, 0202 Oslo (NO)
(72) Inventor: OBRESTAD, Torstein, 3830 Ulefoss (NO); OKSVIK, Arne, 3970 Langesund (NO)
(74) Representative: Onsagers AS
(86) International application number: PCT/NO2007/000423
(87) International publication number: WO 2008/069676

(56) References cited:
- EP-A- 0 017 293
- FR-A- 1 386 897
- GB-A- 1 387 839
- US-A- 3 733 191
- US-A- 3 918 952
- AUREL IOVI, CORINA IOVI, PETRU NEGREA: "studies concerning the obtaining of high quality complex fertilizers" CHEM. BULL. TECH. UNIV. (TIMISOARA), vol. 38, no. 52, 1993, pages 3-12, XP008094061

## Description

The present invention relates to a method for producing NPK or NP material containing polyphosphates. Said material has a specific composition of different phosphates obtained by using nitrophosphate process according to the present invention.

### BACKGROUND

Water-soluble phosphates in fertilizers tend to become immobile in the soil due to precipitation of sparingly soluble phosphate-containing compounds. This occasionally leads to a quite low uptake of phosphates of conventional fertilizers.

The phosphate efficiency could be increased if the phosphate-containing sources had better mobility or if the tendency of the phosphate sources to react with metal ions in the soil was less. This requires phosphate forms that are not precipitating as easily and that are not adsorbed as quickly and strongly by soil particles. Various types of polyphosphates and metaphosphates are claimed to have the described advantages, and in this context Soil Sci. Soc. Am. J., Vol. 46, 1982, Agronomic Effectiveness of Pyrophosphates as an Additive to Monocalcium Phosphate and Diammonium Phosphate in Calcareous soils are referred to as prior art. It is also known that calcium phosphate (CaHPO₄), which is considered to be water insoluble and therefore reacts much slower in soil than water-soluble phosphates, has a significant solubility when the ion strength is high, like for instance in the soil liquid. It is therefore believed that the advantages are the same for polyphosphate as for calcium phosphate by providing a sustained release of phosphates.

Liquid ammonium polyphosphate fertilizer is well known from prior art, and several documents disclose the production of this material, e.g., US 4011300 (Union Oil Company of California), US 3947261 (Agrico Chemical Company) and ES A 2033198 (Agrar Fertilizantes SA). The presence of polyphosphate in the fertilizers is claimed to reduce the precipitation of impurities like iron and aluminium salts which is a problem in liquid fertilizers.

The production of solid NPK fertilizers is also well known from prior art and several documents disclose its production, e.g. US 3617235 (Hydro) and US 5098461 (Tennessee Valley Auth).

None of the NPK fertilizers available on the market today comprises polyphosphates. This is supported by the prevailing market situation. 7 products were analysed for their contents of polyphosphates which have been found to be zero, see table 1.

**Tab. 1: Polyphosphate analyses on several NPK types**

| Manufacturer | NPK type | Polyphospates of total phosphates in finished NPK [%] |
|---|---|---|
| Fertiva (BASF) | 15 - 15 - 15 | 0 |
| Fertiva (BASF) | 20 - 10 - 10 | 0 |
| BASF | 13 - 13 - 21 | 0 |
| Kemira | 20 - 10 - 10 | 0 |
| Kemira | 17 - 17 - 17 | 0 |
| Yara Ravenna | 20 - 10 - 10 | 0 |
| Yara Ravenna | 15 - 15 - 15 | 0 |

So far known NPK producing processes do not directly result in formation of polyphosphate containing fertilizers.

The only known method to include polyphosphates is by adding polyphosphates separately as an additive.

It is well known from prior art that the orthophosphate ion (PO₄) can polymerize according to reaction 2:

Reaction 2: nPO₄ + heat → PₙO₃ₙ₊₁ + nH₂O.

As n moves towards indefinitely, the condensed formula moves towards (PO₃)ₙ. Condensed phosphates (polyphosphates) are defined to be phosphates in a non-ortho phosphate form.

The normal procedure for producing polyphosphates is by wet process route where phosphoric acid is concentrated by heating to above 300 °C or by starting from elemental phosphorous (the furnace process route). Yet another method for producing polyphosphates is by heating metal-hydrogen phosphates (MeHPO₄). The term "Me" relates to a single valent ion as NH₄, K or another in a phosphate compound.

None of these processes is directly applicable in a nitrophosphate process.

### OBJECTIVE

The object of the invention is to obtain a method for producing a solid NPK fertilizers comprising polyphosphate in order to increase the uptake of phosphate in the soil. Another object is to find a method for producing that material in the nitrophosphate process. Another object of the invention is to obtain a method for producing a NPK fertilizer with polyphosphates and comprising a controlled amount of water soluble phosphates and a high amount of citrate-soluble phosphates.

The present invention provides a method for the preparation of solid NPK fertilizer comprising polyphosphates.

These and other objectives may be obtained by the features as set forth in the following description of the invention and/or in the appended patent claims.

### DESCRIPTION

The nitrophosphate process comprises the steps digestion of apatite in nitric acid, crystallization, filtration of calcium nitrate, neutralization with ammonia, evaporation before granulation.

In order to obtain polyphosphates, the present inventors have surprisingly found that this is achieved by reduction of the pressure in the evaporation stage and optionally as well increasing the temperature in the evaporation stage and optionally controlling the temperature in the crystallization stage. By controlling these conditions according to the present invention the content of water in the NPK fertilizer is lowered and thereby the content of polyphosphates increased.

The product according to present method comprises polyphosphates in contradiction to NPK fertilizers of prior art.

### Abbreviations

- AN: ammonium nitrate
- DAP: di ammonium phosphate
- DCP: phosphates sparingly soluble in water but soluble in neutralizes citrate acid solution
- K: potassium
- MAP: mono ammonium phosphate
- MOP: muriate of potash
- N: nitrogen
- NP: nitrogen phosphor containing
- NPK: nitrogen phosphor potassium containing
- P: phosphor
- SOP: sulphate of potash

### Description of the figure

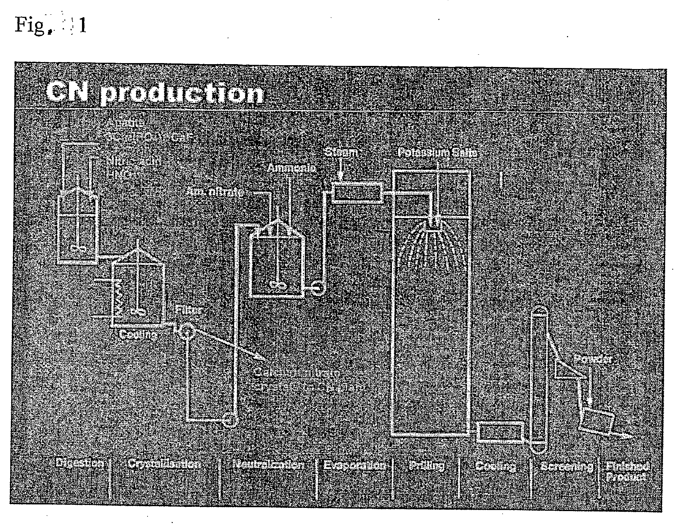

Figure 1 describes schematically the NPK production by the nitrophosphate process.

### DETAILED DESCRIPTION

As shown in figure 1 raw phosphate is digested in nitric acid in the digestion stage 1.

In the crystallization stage 2, calcium nitrate tetrahydrate crystals are produced by cooling the digested solution and the crystals are removed by filtration. Typically, the temperature in the crystallisation stage 2 in the process according to the present invention is in the range of -10 °C to + 10 °C. The amount of soluble Ca left in the liquor will depend on the final cooling temperature. By varying the cooling temperature, the Ca/P ratio in the mother liquid is varied, and this ratio will determine the amount of water-soluble phosphates (mainly MAP/DAP) and the amount of phosphate compounds not soluble in water but soluble in a neutralized citric acid solution (DCP) formed in the neutralization stage 3. Typically, if the final cooling temperature is -5°C, the Ca/P ratio will be close to 0.3, and water-soluble phosphates in the final product will be 80-85 % by weight. If final cooling temperature is 0°C, the Ca/P ratio will be about 0.45, and water-soluble phosphates in the final product will be between 70 and 75 % by weight (varies with phosphorous content of the rock phosphate). Correspondingly, a crystallizer temperature of + 5 °C will give a formation of 26 % polyphosphates of total phosphates in finished NPK when the pressure is 0.085 bar and temperature is 190 °C in the evaporation stage 4, as one example for useful conditions for formation of polyphosphates. For example, a crystallizer temperature of -5 °C gives a formation of 29 % polyphosphates of total phosphates in finished NPK when the pressure is 0.085 bar and temperature is 185 °C in the evaporation stage 4, as another example of the process of the present invention.

The resulting mixture of nitric acid, phosphoric acid and Ca (mother liquid) is transferred to a neutralization stage 3 and reacted with ammonia wherein ammonium nitrate, calcium and ammonium phosphates are produced according to reaction 1.

Reaction 1: Ca(NO₃)₂ + HNO₃ + H₃(PO₄)₃ + NH₃ + water → NH₄NO₃ + (NH₄)₍₃₋ₓ₎HₓPO₄ + CaHPO₄ + water (NP solution)

Finely divided hydroxyapatite may form in the neutralization reaction if the Ca concentration or the pH becomes too high. The specific composition of the NP solution being produced in the neutralization stage 3 depends on N/P and Ca/P ratios of the mother liquid and varies according to grade of NPK material. The term N/P ratio relates to the ratio of nitrogen and phosphorous as measured as weight percentages of the elements, e.g. N [g] / P [g] in a specific sample (e.g. 100 g sample). The N/P ratio for the product according to the present invention is ≥ 0.95. The term Ca/P ratio relates to the ratio of calcium and phosphor measured as weight percentages of the elements. The Ca/P ratio for the product according to the present invention is 1.0 ≥ Ca/P ≥ 0.2, preferably 0.7 ≥ Ca/P ≥ 0.25.

Evaporation of water is carried out in the evaporation stage 4. The formation of polyphosphates in NPK material may be controlled by adjusting the pressure and optionally increasing the temperature in the evaporation stage 4. Preferably, the pressure in the process according to the present invention is decreased to < 0.8 bar and the temperature is increased to ≥ 170 °C, preferably to ≥ 185°C. A pressure of 0.09 bar and temperature at 180 °C will give the formation of 20 % polyphosphates of total phosphates in finished NPK, as one example of useful conditions for formation of polyphosphates. A pressure of 0.08 bar and temperature at 190°C in the evaporation stage 4 will give the formation of 27 % polyphosphates of total phosphates in finished NPK, as another aspect of the present invention. After evaporation stage 4 the water content of the evaporated NP liquor will be less than 1.0 %, preferably less than 0.6 % by weight.

After stage 4, potassium salt in the form of muriate or sulphate of potash may be mixed into the NP liquor just prior to granulation or prilling, such that K originates thereof. After mixing the melt/slurry is launched out in droplets that solidify as they fall through counter flowing air in a prilling tower.

The present invention is therefore related to the preparation of both NP and NPK material, since the addition of potassium is optional. Although the examples are related to NPK material, the person skilled in the art will acknowledge that the present invention is applicable on NP material and processes as well.

The term prilling relates to formation of solids according to US3617235 where the product from the evaporation stage 4 is in the next stage mixed with potassium chloride or sulphate in a high speed mixer by optionally addition of recycled material. The term granulation relates to all other types of formations of solids after a NPK process for formation of solid NPK fertilizers including addition of potassium salt which is either mixed with NP liquor in a granulator or in a separate mixer.

Finally, the granulated/prilled product is dried and optionally further treated such as with screening and surface treatment.

The skilled person will by following the teachings of the present invention easily find a large set of variations in the NPK process relating to pressures and/or temperatures in the evaporation stage 4 and/or the temperature in the crystallization stage 2 in order to produce controlled amounts of polyphosphates.

The NPK or NP material prepared according to the method of the present invention comprises according to one embodiment at least about ≥ 5 % by weight of phosphates as condensed phosphates (polyphosphates), preferably at least about 8 % by weight and more preferably at least about 10 % by weight. According to the method of the present invention a NPK or NP material is provided which contains 5-40 % by weight of condensed phosphates of the total amount of P containing compounds, according to yet another aspect of the invention, it contains 8-38 % and according to yet another aspect it contains 10-20 %.

The phosphates comprise 50-95 % by weight of water-soluble phosphates, preferably 60-95 % by weight. The phosphates of the NPK material comprise as well ≥ 93 % by weight of citrate-soluble phosphates, preferably ≥ 95 % by weight.

Other types of phosphates are also comprised in the NPK or NP material prepared by the method of the present invention. Non-limiting examples of such other types of phosphates are citrate-soluble pyrophosphates (P₂O₇²), tripolyphosphates (P₃O₁₀⁴⁻) and phosphate-containing compounds of the formula Me₍ₙ₊₂₎PₙO₃ₙ₊₁ and Me(PO₃)ₙ

According to one embodiment of the present invention, the NPK or NP material obtained comprises at least 10 % by weight of phosphates as citrate-soluble pyrophosphates (P₂O₇²⁻), tripolyphosphates (P₃O₁₀⁴⁻) or phosphate-containing compounds of the formula Me₍ₙ₊₂₎PₙO₃ₙ₊₁ and/or Me(PO₃)ₙ, where in one aspect Me substantially is NH₄, K, or another single valent ion.

The amount of citrate-soluble is sought to be as high as possible as citric soluble P is considered to be plant available P and is defined as solubles in neutral citric acid and measured by official method.

### EXAMPLES

### Formation of polyphosphates in a melt of AN + MAP

Pure ammonium nitrate (10 % by weight of NH₄NO₃) and mono-ammonium phosphate (90 % by weight of NH₄H₂PO₄) was thoroughly mixed and melted at 190°C. The melt was stored at 200°C for 2 hours. The mixture was analysed for orthophosphate and polyphosphate components before and after heating:
Results:

| Compounds | At melting | After 2 hours at 200°C |
|---|---|---|
| Orthophosphates | 98.9% | 61.3 % |
| Pyrodiphosphates | traces only | 32.0 % |
| Tripolyphosphates | 1.1% | 4.9 % |
| Trimetaphosphates | traces | 1.8 % |

The results of this experiment show that condensed phosphates (polyphosphates) are formed in an ammonium nitrate mono-ammonium phosphate melt.

### Experiment 1. Formation of polyphosphates in a neutral NP solution from NPK plant

A neutral NP (AN + MAP/DAP + DCP) solution from NPK plant was in the laboratory evaporated to dryness at low pressure and room temperature. The chemical content of the NP material is shown in table 2.

**Table 2. Starting NP material; analyses.**

| Total N [%] | NO₃-N [%] | NH₄-N [%] | Water sol P [%] | Acid sol P [%] | Acid sol Ca [%] | Ortho form [%] | Citrate sol. [%] |
|---|---|---|---|---|---|---|---|
| 22.7 | 8.85 | 13.85 | 8.5 | 10.7 | 3.73 | 100 | 99.95 |

About 10 grams of the dry material was heated and kept at various temperatures for 10 and 30 minutes (ambient pressure). Subsequently, a water extract was made, and the extract analysed regarding the amounts of different phosphates (paper chromatography).

The results are given in table 3.

**Table 3. Distribution of condensed phosphates in heat treated NP material produced from NP solution from NPK plant**

| Temp, °C | Orthophosphates [%] | Unidentified I [%] | Pyrophosphates [%] | Tripoly [%] | Unidentified II [%] | Higher polymers [%] |
|---|---|---|---|---|---|---|
| Room temp | 100 | - | - | - | - | - |
| 170 | 86.9 | | 12.2 | - | - | - |
| 200 | 67 | 0.9 | 23.5 | 0.4 | 6.7 | 1.4 |
| 250 | 45.6 | 2.6 | 40.0 | 6.9 | 4.9 | - |
| 300 | 29.4 | 2.2 | 28.5 | 15.3 | 6.2 | 18.4 |

Retention times of 10 and 30 minutes at the temperature levels gave no significant difference in the distribution of phosphate-containing compounds, and the values of table 3 are averages of the values obtained at 10 and 30 minutes.

The solubility of phosphates in neutralized citric acid solution has been determined after the heat treatment and is shown in table 4.

**Table 4. Solubility of phosphates in a neutral ammonium citrate solution**

| Heat treatment | Insoluble phosphates in neutral citric acid [%] |
|---|---|
| Untreated sample | 0.05 |
| 200°C | 0.2 |
| 250°C | 0.05 |
| 300°C | 0.01 |

Experiment 1 shows that orthophosphates of a neutral NP solution produced in a NPK plant and consisting of AN + MAP + DAP + CaHPO4 + water, will partly convert into polyphosphates by heat treatment. A heat treatment up to 300°C is not considered to influence the solubility of phosphates in a neutral ammonium citrate solution.

### Experiment 2. Samples from the nitrophosphate plant

Experiment 1 shows that condensed phosphates (polyphosphates) are produced when NP solutions are heated at atmospheric pressure.

In the nitrophosphate plant, a neutral NP water solution is evaporated at high temperatures to an low water content prior to mixing with potassium salt and granulation or prilling. According to experiment 1, polyphosphates could be produced in a nitrophosphate plant during evaporation of the NP solution.

To verify this, a series of NP/NPK samples were discharged from the plant and analysed for orthophosphates and polyphosphates.

Table 5 provides the result of this experiment.

**Table 5. Results of experiment 2**

| Conditions of evapor., temp and pressure | Retent. time in evapor. | Water content of evapor. NP liquor [%] | NP grade | Ca/P | Orthophosphates in NP liquor [%] | Polyphosphates in NP liquor [%] | Finished NPK grade | Polyphosphates in finished NPK [%] |
|---|---|---|---|---|---|---|---|---|
| 175°C, 0.8 bar | 1 min | 2.9 | NP 23-23 | 0.45 | 10.1 | 0 | NPK 3*15 | 0 |
| 180°C, 0.85 bar | 1 min | 2.4 | NP 23-23 | 0.46 | 10.1 | 0 | NPK 14-14-21 | 0 |
| 185°C, 0.98 bar | 1 min | 2.7 | NP 23-23 | 0.48 | 10.1 % | 0 | NPK 3*16 | 0 |

Conclusion of experiment no 2: Despite of heating the NP solution up to 185°C, polyphosphates could not be detected neither in the concentrated NP liquor nor in the final NPK product.

Based on the results from experiment 1 and reactions 2, 3, it is reasonable to believe that the water content of the NP liquor (obtained by using the mentioned evaporation conditions) of table 5 is too high for the condensing reactions 2, 3 to take place.

### Experiment 3. Reduction of pressure

In order to reduce the water content of the evaporated NP liquor significantly, the conditions (temperature and/or pressure) of the evaporator in the evaporation stage 4 must be adjusted. The temperature of the crystallizer in the crystallization stage 2 was held constant and within the scope of the present invention.

A new series of plant trials were therefore carried out, aiming to substantially reduce the water content of the NP liquor. Since too high temperature in the evaporator strongly will enhance the release of ammonia, the best way to reduce the water content is considered to be lowering of the evaporating pressure.

During the production of NPK 3*16, the composition of the NP base solution entering the evaporator was as follows, in weight percent:
52% AN + 2.5% DAP + 20% MAP + 10% CaHPO₄ + 3.5% others + 12% water. This NP solution was evaporated into an NP melt, then 27% MOP was added together with 3% filler to produce NPK 3*16.

Similarly, NPK 12-11-18 + Mg + S+ micronutrients have been produced by evaporating the corresponding NP solution having the following composition, in weight percent:
51.6% AN + 2.4% DAP + 19.1 % MAP + 10% CaHPO₄ + 2.8% others + 14% water.

After evaporation of this solution into a NP melt, SOP, kieseritte, dolime and micronutrients are added to produce NPK 12-11-18 with Mg and micronutrients.

A corresponding trial with NPK 24-6-12 was carried out as well.

To remove maximum amount of water from the NP solution without increasing temperature too much (to avoid loss of NH₃), the pressure of the evaporator was lowered to between 0.1 and 0.08 bar. The influence on the production of polyphosphates is shown in table 6.

**Table 6. Results of experiment 3**

| Plant evaporator conditions | Retent. time in evapor. | Water content of evaporated NP liquor =NP melt [%] | Orthophosphates in NP melt [%] | Polyphosphates in NP melt [%] | Finished NPK grades | Polyphosphates of total phosphates in finished NPK [%] | Citrate-soluble phosphates of total phosphates [%] |
|---|---|---|---|---|---|---|---|
| 170°C, 0.15 bar | Less than 1 min | 0.93 | 8.9 | 1.04 | NPK 3*16 | 10.6 | 97.0 |
| 180°C, 0.09 bar | Less than 1 min | 0.71 | 8.3 | 1.94 | NPK 3*16 | 19.0 | 97.4 |
| 190°C, 0.08 bar | - | 0.57 | 7.4 | 2.73 | NPK 3*16 | 27.0 | 97.2 |
| 190°C, 0.085 bar | - | 0.64 | 7.1 | 2.24 | NPK 12-11-18 | 24.0 | 96.0 |
| 190°C, 0.085 bar | - | 0.45 | 2.26 | 0.97 | NPK 24-6-12 | 30.0 | 96.1 |

It is evident from this example that condensed polyphosphates can be produced in the nitrophosphate process by evaporating the NP solution in the evaporation stage 4 to a melt almost free of water. This is obtained in a very short time if the evaporation is carried out at a very low pressure and at a temperature between 170 and 200°C.

It is also clear that with rock phosphate (from Kola) used as a phosphate source, the portion of citrate-soluble phosphates (phosphates available for plant) remains close to 100%.

### Experiment 4. Variation of crystallizer temperature in crystallization stage

Table 6 shows that NPK material containing polyphosphates can be produced in the nitrophosphate plant by adjusting the evaporator in the evaporation stage 4 to the right conditions. By varying the cooling temperature in the crystallizer in the crystallization stage 2, the amount of Ca can be varied and thereby the Ca/P ratio and the amount of water-soluble phosphates.

### Cooling temperature between -5°C and +5°C

Starting with rock phosphate (from Kola) in the digester, NPK 3*16 and NPK 24-6-12 are produced with cooling temperature in the crystallizer close to -5 and +1°C, samples are discharged and measured for water-soluble phosphates, polyphosphates and total citrate-soluble phosphates.

Results are given in table 7.

**Table 7: Results of experiment 4**

| Grade | Conditions of evaporator | Cooling temp of crystallizer | Ca/P ratio in NP solution | N/P ratio | Water-soluble phosphates of total phosphates [%] | Polyphosphates of total phosphates in finished NPK [%] | Citrate-soluble phosphates of total phosphates [%] |
|---|---|---|---|---|---|---|---|
| NPK 3*16 | 170°C, 0.20 bar | -5°C | - | 2.28 | 82.2 | 11.5 | 97.2 |
| NPK 3*16 | 190°C, 0.085 bar | +5°C | 0.52 | 2.30 | 71.4 | 26.0 | 96.9 |
| NPK 24-6-12 | 190°C, 0.088 bar | +5°C | 0.49 | 9.00 | 74.8 | 27.0 | - |
| NPK 24-6-12 | 185°C, 0.085 bar | -5°C | 0.30 | 9.00 | 82.0 | 29.0 | - |

It is evident from this example that the Ca content of the NP solution can be varied by varying the final cooling temperature of the crystallizer in the nitrophosphate process such that the amount of water-soluble phosphates and amount of citrate soluble phosphates can be controlled in the final product. By using the correct evaporation conditions in the evaporation stage 4, a substantial amount of condensed phosphates (polyphosphates) is obtained as well.

## Claims

1. A method for the preparation of NPK and NP material,
**characterized by** utilization of a nitrophosphate process comprising the steps digestion of apatite in nitric acid (1), crystallization (2), filtration of calcium nitrate, neutralization with ammonia (3) and evaporation (4) where the pressure is reduced in the evaporation stage (4) such that the water content in the evaporated NP liquor is about ≤ 1.0 % by weight, and wherein the temperature is optionally increased in (4), and wherein the temperature is optionally controlled in the crystallization stage (2), resulting in formation of polyphosphate and optionally adding potassium after stage (4).

2. The method according to claim 1, **characterized in that** the total amount of P containing compounds in the material comprises at least 5 % by weight of condensed phosphates (polyphosphates), preferably at least 8 % and more preferably at least 10 % by weight of phosphates as condensed phosphates (polyphosphates).

3. The method according to claim 2, **characterized in that** the NPK or NP material prepared comprises 60-95% by weight of water soluble phosphates.

4. The method according to claim 1, **characterized in that** the total amount of P containing compounds in the NPK or NP material contains 5 % - 40 % by weight of condensed phosphates (polyphosphates), preferably 8 % - 35 % by weight of phosphates as condensed phosphates (polyphosphates), and more preferred 10 % - 20% by weight of condensed phosphates (polyphosphates).

5. The method according to any one of the claims 1 to 4, **characterized in that** the P containing compounds in the NPK or NP material prepared comprise a mixture of MAP, DAP, DCP and optionally apatite.

6. The method according to any of claim 1 to 5, **characterized in that** the N/P and Ca/P ratios of the NPK or NP material are N/P ≥ 0.95 and 1.0 ≥ Ca/P ≥ 0.2, and optionally K originates from SOP and MOP.

7. The method according to claim 6, **characterized in that** the Ca/P ratio is 0.7 ≥ Ca/P ≥ 0.25.

8. The method according to any of claim 1 to 7, **characterized in that** the total amount of P containing compounds in the NPK or NP material prepared comprises ≥ 93 % by weight of citrate-soluble phosphates.

9. The method according to claim 8, **characterized in that** the NPK or NP material comprises ≥ 95 % by weight of citrate-soluble phosphates.

10. The method according to any of claim 1 tao 9, **characterized in that** the NPK or NP material prepared comprises at least 10 % by weight of phosphates as citrate-soluble pyrophosphates (P₂O₇²⁻), tripolyphosphates (P₃O₁₀) or phosphate-containing compounds of the formula Me₍ₙ₊₂₎PₙO₃ₙ₊₁ and/or Me(PO₃)ₙ.

11. The method according to claim 10, **characterized in that** Me substantially is NH₄, K, or another single valent ion.

12. The method according to any of claim 1 to 11, **characterized in that** it may be produced by a method where the pressure in the evaporation stage (4) is decreased to < 0.8 bar.

13. The method according to any of claim 1 to 11, **characterized in that** the pressure in the evaporation stage (4) is decreased such that the water content in the evaporated NP liquor is about ≤ 1.0 % by weight.

14. The method according to any of claim 1 to 13, **characterized in that** it may be produced by a method where the temperature in the evaporation stage (4) is increased to ≥ 170°C.

15. The method according to any of claim 1 to 14, **characterized in that** it may be produced by a method where the temperature in the crystallization stage (2) is controlled in the range of -10 to + 10°C.

## Patentansprüche

1. Verfahren zur Herstellung von NPK- oder NP-Material,
**gekennzeichnet durch** die Verwendung eines Nitrophosphatverfahrens, umfassend die Schritte Aufschließen von Apatit in Salpetersäure (1), Kristallisation (2), Filtration von Calciumnitrat, Neutralisation mit Ammoniak (3) und Verdampfen (4), wobei der Druck in der Verdampfungsstufe (4) so verringert wird, dass der Wassergehalt in der verdampften NP-Flüssigkeit etwa δ 1,0 Gew.-% beträgt, und wobei die Temperatur in (4) gegebenenfalls erhöht wird, und wobei die Temperatur gegebenenfalls in der Kristallisationsstufe (2) geregelt wird, was zur Bildung von Polyphosphat führt, und gegebenenfalls Zugeben von Kalium nach Stufe (4).

2. Verfahren nach Anspruch 1, **dadurch gekennzeichnet, dass** die Gesamtmenge an P-haltigen Verbindungen in dem Material mindestens 5 Gew.-% kondensierte Phosphate (Polyphosphate), vorzugsweise mindestens 8 Gew.-% und stärker bevorzugt mindestens 10 Gew.-% Phosphate als kondensierte Phosphate (Polyphosphate) umfasst.

3. Verfahren nach Anspruch 2, **dadurch gekennzeichnet, dass** das hergestellte NPK- oder NP-Material 60 - 95 Gew.-% wasserlösliche Phosphate umfasst.

4. Verfahren nach Anspruch 1, **dadurch gekennzeichnet, dass** die Gesamtmenge an P-haltigen Verbindungen in dem NPK- oder NP-Material 5 Gew.-% - 40 Gew.-% kondensierte Phosphate (Polyphosphate), vorzugsweise 8 Gew.-% - 35 Gew.-% Phosphate als kondensierte Phosphate (Polyphosphate) und stärker bevorzugt 10 Gew.-% - 20 Gew.-% kondensierte Phosphate (Polyphosphate) enthält.

5. Verfahren nach einem der Ansprüche 1 bis 4, **dadurch gekennzeichnet, dass** die P-haltigen Verbindungen in dem hergestellten NPK- oder NP-Material ein Gemisch aus MAP, DAP, DCP und gegebenenfalls Apatit umfassen.

6. Verfahren nach einem der Ansprüche 1 bis 5, **dadurch gekennzeichnet, dass** die N/P- und Ca/P-Verhältnisse des NPK- oder NP-Materials N/P ε 0,95 und 1,0 ε Ca/P ε 0,2 sind und K gegebenenfalls aus SOP und MOP stammt.

7. Verfahren nach Anspruch 6, **dadurch gekennzeichnet, dass** das Ca/P-Verhältnis 0,7 ε Ca/P ε 0,25 ist.

8. Verfahren nach einem der Ansprüche 1 bis 7, **dadurch gekennzeichnet, dass** die Gesamtmenge P-haltiger Verbindungen in dem hergestellten NPK- oder NP-Material ε 93 Gew.-% Citrat-lösliche Phosphate umfasst.

9. Verfahren nach Anspruch 8, **dadurch gekennzeichnet, dass** das NPK- oder NP-Material ε 95 Gew.-% Citrat-lösliche Phosphate umfasst.

10. Verfahren nach einem der Ansprüche 1 bis 9, **dadurch gekennzeichnet, dass** das hergestellt NPK- oder NP-Material mindestens 10 Gew.-% Phosphate als Citrat-lösliche Pyrophosphate (P₂O₇²⁻) , Tripolyphosphate (P₃O₁₀) oder Phosphat-haltige Verbindungen der Formel Me₍ₙ₊₂₎PₙO₃ₙ₊₁ und/oder Me(PO₃)ₙ umfasst.

11. Verfahren nach Anspruch 10, **dadurch gekennzeichnet, dass** Me im Wesentlichen NH₄, K oder ein anderes einwertiges Ion ist.

12. Verfahren nach einem der Ansprüche 1 bis 11, **dadurch gekennzeichnet, dass** es durch ein Verfahren hergestellt werden kann, wo der Druck in der Verdampfungsstufe (4) auf < 0,8 bar verringert wird.

13. Verfahren nach einem der Ansprüche 1 bis 11, **dadurch gekennzeichnet, dass** der Druck in der Verdampfungsstufe (4) so verringert wird, dass der Wassergehalt in der verdampften NP-Flüssigkeit etwa δ 1,0 Gew.-% beträgt.

14. Verfahren nach einem der Ansprüche 1 bis 13, **dadurch gekennzeichnet, dass** es durch ein Verfahren hergestellt werden kann, wo die Temperatur in der Verdampfungsstufe (4) auf ε 170 °C erhöht wird.

15. Verfahren nach einem der Ansprüche 1 bis 14, **dadurch gekennzeichnet, dass** es durch ein Verfahren hergestellt werden kann, wo die Temperatur in der Kristallisationsstufe (2) im Bereich von -10 bis +10 °C geregelt wird.

## Revendications

1. Procédé de préparation de matériau à base de NPK et de NP, **caractérisé par** l'utilisation d'un procédé au nitrophosphate comprenant les étapes de digestion d'apatite dans de l'acide nitrique (1), de cristallisation (2), de filtration du nitrate de calcium, de neutralisation avec de l'ammoniac (3) et d'évaporation (4) où la pression est réduite dans l'étape d'évaporation (4) de manière à ce que la teneur en eau de la liqueur de NP évaporée soit environ ≤1,0 % en poids, et dans lequel la température est optionnellement augmentée dans l'étape (4), et dans lequel la température est optionnellement régulée dans l'étape de cristallisation (2), ce qui aboutit à la formation de polyphosphate, et optionnellement l'addition de potassium après l'étape (4).

2. Procédé selon la revendication 1, **caractérisé en ce que** l'ensemble des composés contenant du P du matériau comprennent au moins 5 % en poids de phosphates condensés (polyphosphates), de préférence au moins 8 % et plus préférablement au moins 10 % en poids de phosphates sous forme de phosphates condensés (polyphosphates).

3. Procédé selon la revendication 2, **caractérisé en ce que** le matériau à base de NPK ou de NP préparé comprend 60 à 95 % en poids de phosphates solubles dans l'eau.

4. Procédé selon la revendication 1, **caractérisé en ce que** l'ensemble des composés contenant du P du matériau à base de NPK ou de NP contiennent 5 % à 40 % en poids de phosphates condensés (polyphosphates), de préférence 8 % à 35 % en poids de phosphates condensés (polyphosphates), et plus préférablement 10 % à 20 % en poids de phosphates condensés (polyphosphates).

5. Procédé selon l'une quelconque des revendications 1 à 4, **caractérisé en ce que** les composés contenant du P du matériau à base de NPK ou de NP préparé comprennent un mélange de MAP, de DAP, de DCP et optionnellement d'apatite.

6. Procédé selon l'une quelconque des revendications 1 à 5, **caractérisé en ce que** les rapports N/P et Ca/P du matériau à base de NPK ou de NP sont N/P ≥ 0,95 et 1,0 ≥ Ca/P ≥ 0,2, et optionnellement **en ce que** le K provient du SOP et du MOP.

7. Procédé selon la revendication 6, **caractérisé en ce que** le rapport Ca/P est 0,7 ≥ Ca/P ≥ 0,25.

8. Procédé selon l'une quelconque des revendications 1 à 7, **caractérisé en ce que** l'ensemble des composés contenant du P du matériau à base de NPK ou de NP préparé comprennent ≥ 93 % en poids de phosphates solubles dans le citrate.

9. Procédé selon la revendication 8, **caractérisé en ce que** le matériau à base de NPK ou de NP comprend ≥ 95 % en poids de phosphates solubles dans le citrate.

10. Procédé selon l'une quelconque des revendications 1 à 9, **caractérisé en ce que** le matériau à base de NPK ou de NP préparé comprend au moins 10 % en poids de phosphates sous forme de pyrophosphates solubles dans le citrate (P₂O₇²⁻), de tripolyphosphates (P₃O₁₀) ou de composés contenant du phosphate de formule Me₍ₙ₊₂₎PₙO₃ₙ₊₁ et/ou Me(PO₃)ₙ.

11. Procédé selon la revendication 10, **caractérisé en ce que** le Me est en grande partie constitué de NH₄, de K ou d'un autre ion monovalent.

12. Procédé selon l'une quelconque des revendications 1 à 11, **caractérisé en ce qu'**il peut être produit par un procédé où la pression dans l'étape d'évaporation (4) est réduite à < 0,8 bar.

13. Procédé selon l'une quelconque des revendications 1 à 11, **caractérisé en ce que** la pression dans l'étape d'évaporation (4) est réduite de manière à ce que la teneur en eau de la liqueur de NP évaporée soit environ ≥ 1,0 % en poids.

14. Procédé selon l'une quelconque des revendications 1 à 13, **caractérisé en ce qu'**il peut être produit par un procédé où la température de l'étape d'évaporation (4) est augmentée à ≥ 170 °C.

15. Procédé selon l'une quelconque des revendications 1 à 14, **caractérisé en ce qu'**il peut être produit par un procédé où la température de l'étape de cristallisation (2) est régulée dans la plage de -10 à +10 °C.
